# EUROPEAN PATENT SPECIFICATION

(11) **EP 3 601 437 B1**
(45) Date of publication and mention of the grant of the patent: **20.05.2020**
(21) Application number: 18718337.1
(22) Date of filing: 29.03.2018
(51) Int. Cl.: C08L 67/02, C08L 69/00, C08K 3/013

(54) **THERMOPLASTIC BLENDS WITH HIGH BONDING STRENGTH**
THERMOPLASTISCHE MISCHUNGEN MIT HOHER HAFTFESTIGKEIT
MÉLANGES THERMOPLASTIQUES À HAUTE RÉSISTANCE DE COLLAGE

(30) Priority: 31.03.2017 US 201762479901 P
(43) Date of publication of application: 05.02.2020
(73) Proprietor: SABIC Global Technologies B.V., 4612 PX Bergen op Zoom (NL)
(72) Inventor: HE, Yuanqing, Newburgh IN 47630 (US); WEI, Zhenke, Shanghai (CN); GUAN, Bing, Shanghai 201319 (CN); OZAWA, Norio, Utsunomiya-City Tochigi-Prefecture 321-0118 (JP)
(74) Representative: Elzaburu S.L.P.
(86) International application number: PCT/US2018/025087
(87) International publication number: WO 2018/183641

(56) References cited:
- WO-A1-2016/132337
- WO-A2-2015/200272

## Description

### FIELD OF THE DISCLOSURE

The present disclosure relates to thermoplastic blends with high bonding strength for use in nano molding technology and applications thereof.

### BACKGROUND OF THE DISCLOSURE

The demand for personal electronic devices and consumer products is becoming increasingly more dependent on aesthetics. Consumers seek the most up-to-date devices with the latest cosmetically appealing features and differentiating characteristics. Low weight and small size, for example, are often desirable. Devices housed within metal enclosures generally have a more attractive and overall higher quality appearance than that of conventional plastic enclosures. Thus, the product's enclosure design is of increasing importance.

Metal covers, however, must have an inner plastic mold to retain screw bosses and snap-fits. Typically, the inner mold is glued to the metal cover, requiring an additional "glue" process that gives the cover an unsatisfying thickness. In addition, modern phone devices have increasing numbers of communication functions (e.g., WiFi, 3G, 4G, Bluetooth), each of which require separate antennas. Yet size restrictions of modern devices limit the space available for these antennas.

The introduction of nano molding technology (NMT) has at least partially addressed these challenges. In NMT technology, a thermoplastic resin is integrally molded with a metal without using adhesives. NMT technology has enabled aggressive space reduction in this area, as well as ultra-fine precision and high reliability. NMT technology has not however overcome the challenges presented by the desire for cosmetically appealing features of product enclosures described above. In particular, NMT technology typically employs semi-crystalline materials, such as polybutylene terephthalate resin (PBT) or polyphenylene sulfide resin (PPS). Although such materials have high chemical resistance, making them quite durable in the NMT process, they also contribute to the resin's rough surface, surface resistance to painting and lacquering, low impact strength, high shrinkage rate, and high cost. And, employing materials having a higher crystallinity content leads to increased complications during the molding process. WO 2015/200272 A2 discloses thermoplastic engineering blends (TPE) and methods for manufacturing thermoplastic engineering blends with high bonding strength for nano molding technology. Examples SN7 and SN8 disclose compositions comprising a polycarbonate (SLX), a filler (GF3), impact modifiers (IM1 and IM2) and heat stabilizers (HS1 and HS2).

### SUMMARY

These and other shortcomings are addressed by aspects of the present disclosure.

The present disclosure provides thermoplastic blends comprising a polycarbonate, an inorganic filler, an impact modifier, and a heat stabilizer, wherein a molded specimen of the thermoplastic blend exhibits a bonding strength of greater than about 25 megapascal (MPa) as measured according to ISO 19095; wherein a 3.2 millimeter (mm) molded specimen of the thermoplastic blend has a notched Izod impact strength of greater than about 150 joules per meter (J/m) as measured according to ASTM D256 at 23 °C; and wherein the thermoplastic blend has a melt volume flow rate of about 18 cubic centimeters per 10 minutes (cm³/10 min) as measured according to ASTM D256 at 280 °C under a 5 kilogram (kg) load. The thermoplastic blends of the present disclosures may be amorphous thermoplastic blends.

Additional aspects of the disclosure will be set forth in part in the description which follows, and in part will be obvious from the description, or can be learned by practice of the disclosure. The advantages of the disclosure will be realized and attained by means of the elements and combinations particularly pointed out in the appended claims. It is to be understood that both the foregoing general description and the following detailed description are exemplary and explanatory only and are not restrictive of the disclosure, as claimed.

### DETAILED DESCRIPTION

The present disclosure can be understood more readily by reference to the following detailed description of the disclosure and the Examples included therein. Nano molding technology (NMT) is a method for integrally molding a thermoplastic resin and a metal. The NMT process involves injection molding a thermoplastic resin onto the surface of an etched metal sheet. The NMT process results in a mechanically bonded resin-metal product. NMT is a preferred process to manufacture components used in automobiles, household and consumer electronic products, and industrial machines, replacing traditional insert molding or die casting processes.

The use of NMT technology, with a metal-to-plastic interface having a relatively high bond strength ("NMT bonding strength"), allows portions of consumer electronic products (and other products) which were traditionally glued to an inner plastic mold, to be replaced with metal/plastic bonded parts. For a successful NMT process, it is important to have a high bonding strength between the thermoplastic resin and metal.

Thermoplastic materials currently used in NMT applications are semi-crystalline based blends, such as PBT or PPS. Yet PBT is not ideal; it has high stiffness and rigidity, high tensile strength, high resistance to wear, low friction, low impact toughness, and high shrinkage rate during cooling. PPS is equally problematic. While it the highly crystalline material provides high chemical resistance, making it very durable in the NMT process, it has a rough surface resistance to painting and lacquering, low impact strength, and high cost.

Because of their poor bonding strength, it has been difficult to use other thermoplastic resins, such as amorphous resins like polycarbonate, in the NMT process. But, by blending with a combination of block copolymer and terpolymers, products made by the NMT process can have strong resin-metal mechanical bonds, high impact, excellent color ability, improved shrinkage, improved dimensional stability as measured according to ASTM D1204, and an affordable cost.

According to an aspect of the present disclosure, a thermoplastic blend comprising a polycarbonate, an inorganic filler, and impact modifier(s), and a heat stabilizer for use in nano molding technology, wherein the composition has high bonding strength with metals is provided.

### AMORPHOUS THERMOPLASTIC BLENDS

Thus, in various aspects, the present disclosure pertains to a thermoplastic blend comprising a polycarbonate, an inorganic filler, an impact modifier (or impact modifier combinations), and a heat stabilizer; and wherein a molded specimen of the thermoplastic blend exhibits a bonding strength of greater than about 25 MPa as measured according to ISO 19095; wherein a 3.2 mm molded specimen of the thermoplastic blend has a notched Izod impact strength of greater than about 150 J/m as measured according to ASTM D256 at 23°C; and wherein the thermoplastic blend has a melt volume flow rate of greater than about 18 cubic centimeters per 10 minutes as measured according to ASTM D256 at 280°C under a 5 kilogram load.

### Polycarbonate Component

In one embodiment, the plastic material of the amorphous thermoplastic blend can comprise a polycarbonate. Descriptions of the various types of polycarbonates are articulated below, but should not be construed as limiting.

Various types of polycarbonates that have a repeating structural background of the following formula: 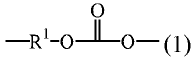 can be utilized.

The selection of a polycarbonate backbone of choice depends on many factors such as end use and other factors understood by one of ordinary skill the art.

In one embodiment, the polycarbonates have repeating structural carbonate units of the formula (1) above
wherein greater than or equal to 60 percent of the total number of R¹ groups contain aromatic organic groups and the balance thereof are aliphatic, alicyclic, or aromatic groups.

In another embodiment, the polycarbonate is derived from bisphenol-A (BPA).

In another embodiment, each R¹ group is a divalent aromatic group, for example derived from an aromatic dihydroxy compound of the formula (2):

HO-A¹-Y¹-A²-OH (2)

wherein each of A¹ and A² is a monocyclic divalent arylene group, and Y¹ is a single bond or a bridging group having one or two atoms that separate A¹ from A². In an exemplary embodiment, one atom separates A¹ from A². In another embodiment, when each of A¹ and A² is phenylene, Y¹ is para to each of the hydroxyl groups on the phenylenes. Illustrative non-limiting examples of groups of this type are -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging group Y¹ can be a hydrocarbon group or a saturated hydrocarbon group such as methylene, cyclohexylidene, or isopropylidene.

Included within the scope of formula (2) are bisphenol compounds of general formula (3):

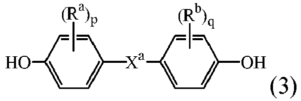

wherein R^{a} and R^{b} each represent a halogen atom or a monovalent hydrocarbon group and can be the same or different; p and q are each independently integers of 0 to 4; and X^{a} represents a single bond or one of the groups of formulas (4) or (5): 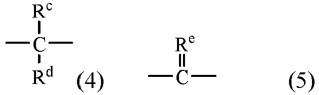 wherein Rc and Rd are each independently hydrogen, C₁₋₁₂ alkyl, C₁₋₁₂ cycloalkyl, C₇₋₁₂ arylalkyl, C₁₋₁₂heteroalkyl, or cyclic C₇₋₁₂heteroarylalkyl, and Re is a divalent C₁₋₁₂ hydrocarbon group. In particular, R^{c} and R^{d} are each the same hydrogen or C₁₋₄ alkyl group, specifically the same C₁₋₃ alkyl group, even more specifically, methyl.

In an embodiment, R^{c} and R^{d} taken together represent a C₃₋₂₀ cyclic alkylene group or a heteroatom-containing C₃₋₂₀ cyclic alkylene group comprising carbon atoms and heteroatoms with a valency of two or greater. These groups can be in the form of a single saturated or unsaturated ring, or a fused polycyclic ring system wherein the fused rings are saturated, unsaturated, or aromatic. A specific heteroatom-containing cyclic alkylene group comprises at least one heteroatom with a valency of 2 or greater, and at least two carbon atoms. Exemplary heteroatoms in the heteroatom-containing cyclic alkylene group include-O-, -S-, and -N(Z)-, where Z is a substituent group selected from hydrogen, hydroxy, C₁₋₁₂ alkyl, C₁₋₁₂ alkoxy, or C₁₋₁₂ acyl.

In a specific exemplary embodiment, X^{a} is a substituted C₃₋₁₈ cycloalkylidene of the formula (6): 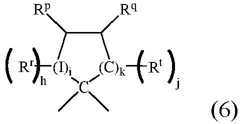 wherein each R^{r}, R^{p}, R^{q}, and R^{t} is independently hydrogen, halogen, oxygen, or C1-12 organic group; I is a direct bond, a carbon, or a divalent oxygen, sulfur, or -N(Z)- wherein Z is hydrogen, halogen, hydroxy, C₁₋₁₂ alkyl, C₁₋₁₂ alkoxy, or C₁₋₁₂ acyl; h is 0 to 2, j is 1 or 2, i is an integer of 0 or 1, and k is an integer of 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (6) will have an unsaturated carbon-carbon linkage where the ring is fused. When k is 1 and i is 0, the ring as shown in formula (6) contains 4 carbon atoms, when k is 2, the ring as shown contains 5 carbon atoms, and when k is 3, the ring contains 6 carbon atoms. In one embodiment, two adjacent groups (e.g., R^{q} and R^{t} taken together) form an aromatic group, and in another embodiment, R^{q} and Rt taken together form one aromatic group and R^{r} and R^{p} taken together form a second aromatic group.

Non-limiting examples of dihydroxy compounds that can provide polycarbonates with Tgs greater than 170°C include 3,3-bis(4-hydroxyphenyl)-2-phenylisoindolin-1-one (PPPBP), 1,1-bis(4-hydroxyphenyl)-3,3,5-trimethylcyclohexane) (Bisphenol TMC), 4,4'-(1-phenylethane-1,1-diyl)diphenol (bisphenol AP) as well as adamantyl containing aromatic dihydroxy compounds and flourene containing aromatic dihydroxy compounds.

Specific example of dihydroxy compounds of formula (2) can be the following formula (7): 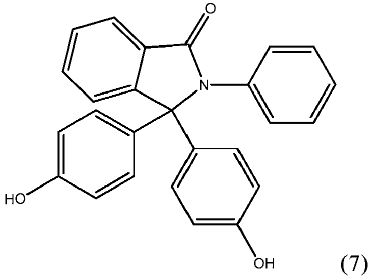 (also known as 3,3-bis(4-hydroxyphenyl)-2-phenylisoindolin-1-one (PPPBP)) also known as 2-phenyl-3,3-bis(4-hydroxyphenyl)phthalimidine.

Polycarbonate can include structural units derived from at least one of: 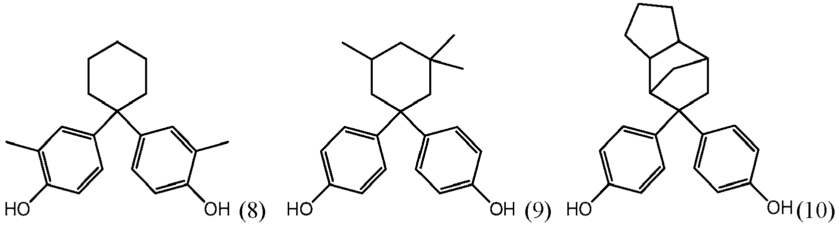 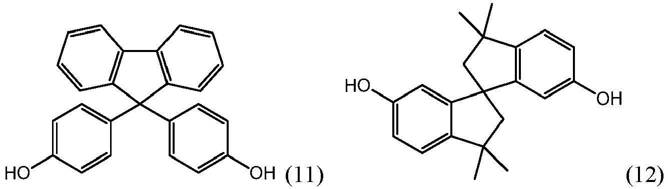 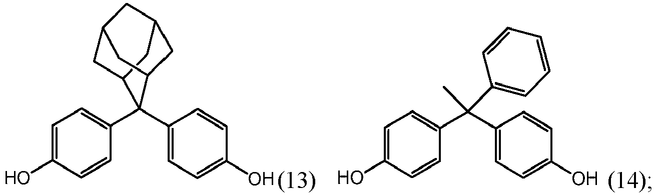 or

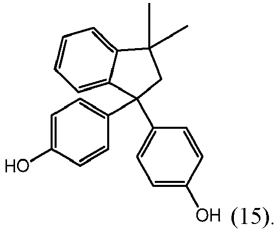

The polycarbonate can include at least 50 mol% structural units derived from Bisphenol A (BPA), and have a glass transition temperature (T_{g}) of at least 170°C. The polycarbonate can include structural units derived from PPPBP, wherein the PPPBP content is at most 50 mole percent (mol%), wherein the first polycarbonate has a T_{g} of at least 170 °C. The polycarbonate can include structural units derived from PPPBP, wherein the PPPBP content is at most 40 mol%, wherein the first polycarbonate has a T_{g} of at least 170 °C. The polycarbonate can include about 15 mol% to about 40 mol% structural units derived from PPPBP. The polycarbonate can include about 31 mol% to about 35 mol% structural units derived from PPPBP. The polycarbonate can include structural units derived from PPPBP, and can have a weight average molecular weight of about 15,500 grams per mol (g/mol) to about 40,000 g/mol, as determined by gel permeation chromatography (GPC) using BPA polycarbonate standards.

The polycarbonate can be selected from a para-cumylphenol end-capped polycarbonate comprising structural units derived from PPPBP and BPA, having a weight average molecular weight of about 23,000 g/mol to about 40,000 g/mol as determined by gel permeation chromatography (GPC) using BPA polycarbonate standards; and a para-cumylphenol end-capped polycarbonate comprising structural units derived from PPPBP and BPA, having a weight average molecular weight of about 17,000 g/mol to about 20,000 g/mol, as determined by gel permeation chromatography (GPC) using BPA polycarbonate standards.

The first polycarbonate can be selected from a para-cumylphenol (PCP) end-capped polycarbonate comprising structural units derived from PPPBP and BPA, having a weight average molecular weight of about 20,000 g/mol as determined by gel permeation chromatography (GPC) using BPA polycarbonate standards; and a para-cumylphenol end-capped polycarbonate comprising structural units derived from PPPBP and BPA, having a weight average molecular weight of about 23,000 g/mol, as determined by gel permeation chromatography (GPC) using BPA polycarbonate standards.

The poly(aliphatic ester)-polycarbonate copolymer can have a weight average molecular weight of about 15,000 g/mol to about 25,000 g/mol, as determined by gel permeation chromatography (GPC) using BPA polycarbonate standards. The poly(aliphatic ester)-polycarbonate copolymer can have a Tg of at least 100°C.

The poly(aliphatic ester)-polycarbonate copolymer can have the formula: 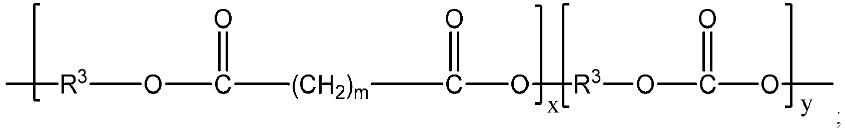 wherein m is 8 to 10.

The poly(aliphatic ester)-polycarbonate copolymer can have the formula: 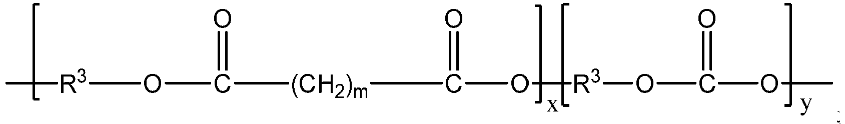 wherein m is 8; and R³ is

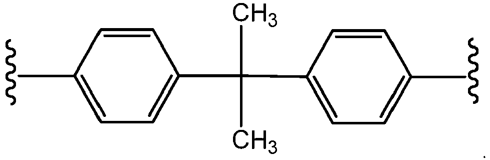

The poly(aliphatic ester)-polycarbonate copolymer can be selected from a para-cumylphenol end-capped polyester-polycarbonate copolymer comprising structural units derived from sebacic acid and BPA, having a weight average molecular weight of about 18,000 g/mol, as determined by gel permeation chromatography using BPA polycarbonate standards, and a melt flow rate of at least 85 g/10 min, measured according to ASTM D1238 (300°C, 1.2kgf); and a para-cumylphenol end-capped polyester-polycarbonate copolymer comprising structural units derived from sebacic acid and BPA, having a weight average molecular weight of about 22,000 g/mol, as determined by gel permeation chromatography using BPA polycarbonate standards, and a melt flow rate of about 45 g/10 min to about 60 g/10 min, measured according to ASTM D1238 (300 °C, 1.2 kilogram-force (kgf)).

Exemplary but by no means limiting polycarbonates for use in amorphous thermoplastic blends of aspects of the present disclosure include poly(aliphatic ester-carbonate), such as those comprising bisphenol A carbonate units and sebacic acid-bisphenol A ester units available from the SABIC under the trade designation LEXAN™ ML7683-111N. Other possible polycarbonates for use in the present disclosure include a 2-phenyl-3,3-bis(4-hydroxyphenyl) phthalimidine (PPPBP) /bisphenol A copolycarbonate comprising 33 mol% PPPBP available from SABIC under the trade designation LEXAN™ ML7668-111N; a bisphenol A homopolycarbonate having a molecular weight range from about 22,000 to about 30,000 Dalton available from SABIC under the trade designation LEXAN™ 105-111N; and an optical quality bisphenol A homopolycarbonate when phenol endcap having a molecular weight range from about 15,000 to about 20,000 Dalton available from SABIC under the trade designation LEXAN™ 7642-111N; or a combination thereof.

In some aspects, the polycarbonate component may be present in an amount from about 10 wt% to about 90 wt%, provided that the combined wt% of all components does not exceed 100 wt%. It is understood that various intervening endpoints may be used, including, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, and 85 wt%. In further aspects, the polycarbonate component is present in an amount from about 30 wt% to about 80 wt%, or from about 40 wt% to about 50 wt%, or from about 42 wt% to about 50 wt%, provided that the combined wt% of all components does not exceed 100 wt%. In still further aspects, the polycarbonate component comprises about 40 wt% to about 65 wt% sebacic acid/BPA/PCP polyestercarbonate, or about 40 wt% sebacic acid/BPA/PCP polyestercarbonate, or about 45 wt% sebacic acid/BPA/PCP polyestercarbonate, or about 60 wt% sebacic acid/BPA/PCP polyestercarbonate.

In further aspects, the polycarbonate component comprises about 40 wt% to about 45 wt% PPPBP/BPA copoly carbonate, or about 40 wt% PPPBP/BPA copoly carbonate, or about 45 wt% PPPBP/BPA copoly carbonate.

In even further aspects, the polycarbonate component comprises about 40 wt% to about 45 wt% bisphenol A homopolycarbonate having a molecular weight range from about 22,000 to about 30,000 Dalton, or about 40 wt% bisphenol A homopolycarbonate having a molecular weight range from about 22,000 to about 30,000 Dalton, or about 45 wt% bisphenol A homopolycarbonate having a molecular weight range from about 22,000 to about 30,000 Dalton. Molecular weight range is determined by gel permeation chromatography using bisphenol A polycarbonate standards.

In yet further aspects, the polycarbonate component comprises about 40 wt% to about 45 wt% optical quality bisphenol A homopolycarbonate when phenol endcap having a molecular weight range from about 15,000 to about 20,000 Dalton, or about 40 wt% optical quality bisphenol A homopolycarbonate when phenol endcap having a molecular weight range from about 15,000 to about 20,000 Dalton, or about 45 wt% optical quality bisphenol A homopolycarbonate when phenol endcap having a molecular weight range from about 15,000 to about 20,000 Dalton.

In some aspects, the polycarbonate component may be present in an amount from 10 wt% to 90 wt%, provided that the combined wt% of all components does not exceed 100 wt%. It is understood that various intervening endpoints may be used, including, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, 80 wt%, and 85 wt%. In further aspects, the polycarbonate component is present in an amount from 30 wt% to 80 wt%, or from 40 wt% to 50 wt%, or from 42 wt% to 50 wt%, provided that the combined wt% of all components does not exceed 100 wt%. In still further aspects, the polycarbonate component comprises 40 wt% to 65 wt% sebacic acid/BPA/PCP polyestercarbonate, or 40 wt% sebacic acid/BPA/PCP polyestercarbonate, or 45 wt% sebacic acid/BPA/PCP polyestercarbonate, or 60 wt% sebacic acid/BPA/PCP polyestercarbonate.

In further aspects, the polycarbonate component comprises 40 wt% to 45 wt% PPPBP/BPA copolycarbonate, or 40 wt% PPPBP/BPA copolycarbonate, or 45 wt% PPPBP/BPA copoly carbonate.

In even further aspects, the polycarbonate component comprises 40 wt% to 45 wt% bisphenol A homopolycarbonate having a molecular weight range from 22,000 to 30,000 Dalton, or 40 wt% bisphenol A homopolycarbonate having a molecular weight range from 22,000 to 30,000 Dalton, or 45 wt% bisphenol A homopolycarbonate having a molecular weight range from 22,000 to 30,000 Dalton. Molecular weight range is determined by gel permeation chromatography using bisphenol A polycarbonate standards.

In yet further aspects, the polycarbonate component comprises 40 wt% to 45 wt% optical quality bisphenol A homopolycarbonate when phenol endcap having a molecular weight range from 15,000 to 20,000 Dalton, or 40 wt% optical quality bisphenol A homopolycarbonate when phenol endcap having a molecular weight range from 15,000 to 20,000 Dalton, or 45 wt% optical quality bisphenol A homopolycarbonate when phenol endcap having a molecular weight range from 15,000 to 20,000 Dalton.

### Inorganic Filler Component

The composition may comprise inorganic fillers. Possible inorganic fillers include, for example, glass fibers or glass flakes. In certain aspects of the disclosure, the glass fiber can be continuous or chopped. In a still further aspect, the glass fiber is continuous. In yet a further aspect, the glass fiber is chopped. In various further aspects, the glass fiber has a round (or circular), flat, or irregular cross-section. Thus, use of non-round fiber cross sections is possible. In a still further aspect, the glass fiber has a circular cross-section. In yet further aspect, the diameter of the glass fiber is from about 1 to about 35 microns (micrometers, µm). In an even further aspect, the diameter of the glass fiber is from about 4 to about 35 µm. In a still further aspect, the diameter of the glass fiber is from about 5 to about 30 µm. In a even further aspect, the diameter of the glass fiber can range from about 10 to about 20 µm. In a still further aspect, the glass fiber has a diameter from about 2 µm to about 15 µm. In a yet further aspect, the glass fiber has a diameter from about 3 µm to about 8 µm.

Exemplary but by no means limiting inorganic fillers for use in amorphous thermoplastic blends of aspects of the present disclosure include flat glass fiber from the Nitto Boseki Company (Nittobo) of Tokyo, Japan under the trade designation CSG 3PA-830. CSG 3PA-830 has a major axis of about 27 µm, a minor axis of about 4 µm, a 4.0 ratio between major axis and minor axis, epoxy-based sizing agent, and a cut length of about 3mm.

In some aspects, the inorganic filler component may be present in an amount from about 1 wt% to about 60 wt%, provided that the combined wt% of all components does not exceed 100 wt%. It is understood that various intervening endpoints may be used, including, 5 wt%, 10 wt%, 15 wt%, 20 wt%, 25 wt%, 30 wt%, 35 wt%, 40 wt%, 45 wt%, 50 wt%, and 55 wt%. In further aspects, the inorganic filler component is present in an amount from about 10 wt% to about 50 wt%, or from about 20 wt% to about 50 wt%, or from about 30 wt% to about 50 wt%, provided that the combined wt% of all components does not exceed 100 wt%. In even further aspects, the inorganic filler component is present in an amount from about 30 wt%. In yet further aspects, the inorganic filler component is present in an amount from about 50 wt%.

In some aspects, the inorganic filler component may be present in an amount from 1 wt% to 60 wt%, provided that the combined wt% of all components does not exceed 100 wt%. It is understood that various intervening endpoints may be used, including, 5 wt%, 10 wt%, 15 wt%, 20 wt%, 25 wt%, 30 wt%, 35 wt%, 40 wt%, 45 wt%, 50 wt%, and 55 wt%. In further aspects, the inorganic filler component is present in an amount from 10 wt% to 50 wt%, or from 20 wt% to 50 wt%, or from 30 wt% to 50 wt%, provided that the combined wt% of all components does not exceed 100 wt%. In even further aspects, the inorganic filler component is present in an amount from 30 wt%. In yet further aspects, the inorganic filler component is present in an amount from 50 wt%.

### Impact Modifier Component

The thermoplastic blend may comprise impact modifiers. For example, the composition can further include impact modifier(s), with the proviso that the additives are selected so as to not significantly adversely affect the desired properties (e.g., high gloss metallized molded articles, flame performance) of the composition. Suitable impact modifiers may be high molecular weight elastomeric materials derived from olefins, monovinyl aromatic monomers, acrylic and methacrylic acids and their ester derivatives, as well as conjugated dienes. The blend composition formed from conjugated dienes can be fully or partially hydrogenated. The elastomeric materials can be in the form of homopolymers or copolymers, including random, block, radial block, graft, and core-shell copolymers. Combinations of impact modifiers may be used. When a combination of impact modifiers are used, it not only affects amorphous thermoplastic blend's bonding strength and impact performance, but also its flow performance. By carefully selecting impact modifier types, loading and combinations, the balance between flow and impact strength can be achieved at the plastics-metal hybrid while maintaining high bonding strength performance.

Exemplary but by no means limiting impact modifiers for use in amorphous thermoplastic blends of aspects of the present disclosure include segmented elastomers having soft poly ether segments and hard polyester segments such as a butylene phthalate/poly(alkylene ether) phthalate copolymer available from the DuPont Company of Wilmington, Delaware, under the trade designation HYTREL™ 4056. More particularly, the HYTREL™ 4056 polyetherester has melt flow rate of about 5.3 grams per 10 minutes when measured in accordance with ASTM D-1238 at 190 °C and under a 2,160 gram load; a melting point of about 298 °F (about 148 °C) when measured in accordance with ASTM D-3418 (differential scanning calorimeter-peak of endotherm); a specific gravity of about 1.16 when measured in accordance with ASTM D-792; a tensile stress at break (head speed 2 inches per minute) of about 4,050 pounds per square inch (psi) when measured in accordance with ASTM D-638; an elongation at break of about 550 percent when measured in accordance with ASTM D-638; and a flexural modulus at 212 °F (about 100 °C) of about 3,900 psi.

Other possible impact modifier components include an ethylene-methyl acrylate-glycidylmethacrylate terpolymer available from Arkema of Colombes, France under the trade designation LOTADER™ AX 8900; grafted functional polymers such as an acrylic acid ethyl ester-ethylene copolymer with ethyl acrylate below 20% available from Dow Chemical Company of Midland, Michigan under the trade designation AMPLIFY™ EA 102; and acrylic core-shell polymers such as acrylic core-shell impact modifiers available from Rohm and Haas China Holding Company Ltd. of Shanghai, China under the trade name PARALOID™ EXL™ 3330; and combinations thereof.

In some aspects, the impact modifier component may be present in an amount from about 1 wt% to about 10 wt%, provided that the combined wt% of all components does not exceed 100 wt%. It is understood that various intervening endpoints may be used, including, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, and 9.5 wt%. In further aspects, the impact modifier component is present in an amount from about 5 wt% to about 7 wt%, or from about 1 wt% to about 6 wt%, or from about 1 wt% to about 8 wt%, or from about 2 wt% to about 6 wt%, or from about 3 wt% to about 10 wt%, provided that the combined wt% of all components does not exceed 100 wt%. In some aspects, the impact modifier component comprises about 3 wt% ethylene-methyl acrylate-glycidylmethacrylate terpolymer, about 2.5 wt% butylene phthalate/poly(alkylene ether) phthalate copolymer, and about 2 wt% acrylic acid ethyl ester-ethylene copolymer. In further aspects, the impact modifier component comprises about 1 wt% to about 6 wt% of ethylene-methyl acrylate-glycidylmethacrylate terpolymer. In some aspects, the impact modifier component comprises about 1 wt% to about 8 wt% of butylene phthalate/poly(alkylene ether) phthalate copolymer. In some aspects, the impact modifier component comprises about 2 wt% to about 6 wt% of acrylic acid ethyl ester-ethylene copolymer. In some aspects, the impact modifier component comprises about 3 wt% to about 10 wt% of acrylic core-shell polymers.

In some aspects, the impact modifier component may be present in an amount from 1 wt% to 10 wt%, provided that the combined wt% of all components does not exceed 100 wt%. In further aspects, the impact modifier component is present in an amount from 5 wt% to 7.5 wt%, or from 1 wt% to 6 wt%, or from 1 wt% to 8 wt%, or from 2 wt% to 6 wt%, or from 3 wt% to 10 wt%, provided that the combined wt% of all components does not exceed 100 wt%. In some aspects, the impact modifier component comprises 3 wt% ethylene-methyl acrylate-glycidylmethacrylate terpolymer, 2.5 wt% butylene phthalate/poly(alkylene ether) phthalate copolymer, and 2 wt% acrylic acid ethyl ester-ethylene copolymer. In further aspects, the impact modifier component comprises 1 wt% to 6 wt% of ethylene-methyl acrylate-glycidylmethacrylate terpolymer. In some aspects, the impact modifier component comprises 1 wt% to 8 wt% of butylene phthalate/poly(alkylene ether) phthalate copolymer. In some aspects, the impact modifier component comprises 2 wt% to 6 wt% of acrylic acid ethyl ester-ethylene copolymer. In some aspects, the impact modifier component comprises 3 wt% to 10 wt% of acrylic core-shell polymers.

### Heat Stabilizer Component

The composition may comprise heat stabilizers. Exemplary heat stabilizer additives include, for example, organophosphites such as triphenyl phosphite, tris-(2,6-dimethylphenyl)phosphite, tris-(mixed mono-and di-nonylphenyl)phosphite, tris(2,4-ditert-butylphenyl)phosphite, or the like; phosphonates such as dimethylbenzene phosphonate or the like; phosphates such as trimethyl phosphate, or the like; or combinations comprising at least one of the foregoing heat stabilizers. In certain embodiments, the heat stabilizer is tetrakis(2,4-di-tert-butylphenyl)[1,1-biphenyl]-4,4'diylbisphosphonite.

Exemplary but by no means limiting heat stabilizers for use in amorphous thermoplastic blends of aspects of the present disclosure include tris(2,4-ditert-butylphenyl)phosphite from the BASF Corporation of Florham Park, New Jersey under the trade designation IRGAFOS™ 168.

In some aspects, the heat stabilizer component may be present in an amount from about 0.01 wt% to about 3 wt%, provided that the combined wt% of all components does not exceed 100 wt%. It is understood that various intervening endpoints may be used, including, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, and 3 wt%. In further aspects, the heat stabilizer component is present in an amount from about 0.01 wt% to about 1 wt%, or from about 0.05 wt% to about 0.2 wt%, provided that the combined wt% of all components does not exceed 100 wt%. In further aspects, the heat stabilizer is present in an amount from about 0.06 wt%. In still further aspects, the heat stabilizer component comprises tris(2,4-ditert-butylphenyl) phosphite. In even further aspects, the heat stabilizer comprises about 0.06 wt% tris(2,4-ditert-butylphenyl) phosphite.

In some aspects, the heat stabilizer component may be present in an amount from 0.01 wt% to 3 wt%, provided that the combined wt% of all components does not exceed 100 wt%. It is understood that various intervening endpoints may be used, including, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, and 3 wt%. In further aspects, the heat stabilizer component is present in an amount from 0.01 wt% to 1 wt%, or from 0.05 wt% to 0.2 wt%, provided that the combined wt% of all components does not exceed 100 wt%. In further aspects, the heat stabilizer is present in an amount from 0.06 wt%. In even further aspects, the heat stabilizer comprises 0.06 wt% tris(2,4-ditert-butylphenyl) phosphite.

### Additional Components

The compositions may comprise additional components, such as one or more additives. Suitable additives include, but are not limited to plasticizers, lubricants, ultraviolet (UV) stabilizers, colorants, flame retardants, fillers, reinforcing agents, antioxidant agents, antistatic agents, blowing agents, anti-drip agents, and radiation stabilizers. In certain embodiments, the composition may comprise a reactive styrene-acrylate-epoxy oligomer. In some embodiments, the composition comprises chain extender, such as an epoxy-functionalized styrene-acrylic oligomers/polymers, such as those available under the tradename JONCRYL™. In some embodiments, the chain extender contains glycidyl methacrylate (GMA). Exemplary chain extenders of this type include, but are not limited to, JONCRYL™ ADR-4368-C/CS.

Such materials may be present in an amount from about 0.01 wt% to about 5 wt%, provided that the combined wt% of all components does not exceed 100 wt%. It is understood that various intervening endpoints may be used, including, 0.02 wt%, 0.03 wt%, 0.04 wt%, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, 3 wt%, and 4 wt%. In further aspects, the heat stabilizer component is present in an amount from about 0.03 wt% to about 0.05 wt%.

### ASPECTS

In various aspects, the present disclosure pertains to and includes at least the following aspects.
Aspect 1. A thermoplastic blend comprising: a polycarbonate; an inorganic filler; an impact modifier; and a heat stabilizer; and wherein a molded specimen of the thermoplastic blend exhibits a bonding strength of greater than about 25 MPa as measured according to ISO 19095; wherein a 3.2 mm molded specimen of the thermoplastic blend has a notched Izod impact strength of greater than about 150 J/m as measured according to ASTM D256 at 23°C; and wherein the thermoplastic blend has a melt volume flow rate of about 18 cubic centimeters per 10 minutes as measured according to ASTM D256 at 280°C under a 5 kilogram load.
Aspect 2. A thermoplastic blend comprising a polycarbonate; an inorganic filler; an impact modifier; and a heat stabilizer; and wherein a molded specimen of the thermoplastic blend exhibits a bonding strength of greater than about 25 MPa as measured according to ISO 19095; wherein a 3.2 mm molded specimen of the thermoplastic blend has a notched Izod impact strength of greater than about 150 J/m as measured according to ASTM D256 at 23°C; and wherein the thermoplastic blend has a melt volume flow rate of about 18 cubic centimeters per 10 minutes as measured according to ASTM D256 at 280°C under a 5 kilogram load.
Aspect 3. A thermoplastic blend comprising a polycarbonate; an inorganic filler; an impact modifier; and a heat stabilizer; and wherein a molded specimen of the thermoplastic blend exhibits a bonding strength of greater than about 25 MPa as measured according to ISO 19095; wherein a 3.2 mm molded specimen of the thermoplastic blend has a notched Izod impact strength of greater than about 150 J/m as measured according to ASTM D256 at 23°C; and wherein the thermoplastic blend has a melt volume flow rate of about 18 cubic centimeters per 10 minutes as measured according to ASTM D256 at 280°C under a 5 kilogram load.
Aspect 4. The thermoplastic blend of any of aspects 1-3, wherein the polycarbonate comprises a sebacic acid polycarbonate, a bisphenol-A polycarbonate, and a para-cumyl phenol polyestercarbonate.
Aspect 5. The thermoplastic blend of any of aspects 1-3, wherein the polycarbonate comprises a bisphenol A homopolycarbonate having a molecular weight range from about 15,000 to about 30,000 Dalton as determined by gel permeation chromatography using bisphenol A polycarbonate standards.
Aspect 6. The thermoplastic blend of any one of the aspects 1-5, wherein the polycarbonate comprises from about 30 wt% to about 80 wt% of the thermoplastic blend, provided that the combined wt% of all components does not exceed 100 wt%.
Aspect 7. The thermoplastic blend of any one of the aspects 1-6, wherein the polycarbonate comprises from about 40 wt% to about 50 wt% of the thermoplastic blend, provided that the combined wt% of all components does not exceed 100 wt%.
Aspect 8. The thermoplastic blend of any one of the aspects 1-7, wherein the polycarbonate comprises from about 42 wt% to about 50 wt% of the thermoplastic blend, provided that the combined wt% of all components does not exceed 100 wt%.
Aspect 9. The thermoplastic blend of aspect 4, wherein the polycarbonate comprises about 40 wt% to about 65 wt% of the thermoplastic blend, provided that the combined wt% of all components does not exceed 100 wt%.
Aspect 10. The thermoplastic blend of aspect 4, wherein the polycarbonate comprises about 40 wt% of the thermoplastic blend, provided that the combined wt% of all components does not exceed 100 wt%.
Aspect 11. The thermoplastic blend of aspect 4, wherein the polycarbonate comprises about 45 wt% of the thermoplastic blend, provided that the combined wt% of all components does not exceed 100 wt%.
Aspect 12. The thermoplastic blend of aspect 4, wherein the polycarbonate comprises about 60 wt% of the thermoplastic blend, provided that the combined wt% of all components does not exceed 100 wt%.
Aspect 13. The thermoplastic blend of aspect 5, wherein the polycarbonate comprises a bisphenol A homopolycarbonate having a molecular weight range from about 22,000 to about 30,000 Dalton as determined by gel permeation chromatography using bisphenol A polycarbonate standards.
Aspect 14. The thermoplastic blend of aspect 5, wherein the polycarbonate comprises an optical quality bisphenol A homopolycarbonate with phenol endcap having a molecular weight range from about 15,000 to about 20,000 Dalton as determined by gel permeation chromatography using bisphenol A polycarbonate standards.
Aspect 15. The thermoplastic blend of any one of the aspects 1-14, wherein the inorganic filler comprises flat glass.
Aspect 16. The thermoplastic blend of any one of the aspects 1-15, wherein the inorganic filler comprises from about 1 wt% to about 60 wt% of the thermoplastic blend, provided that the combined wt% of all components does not exceed 100 wt%.
Aspect 17. The thermoplastic blend of any one of the aspects 1-16, wherein the inorganic filler comprises from about 30 wt% to about 50 wt% of the thermoplastic blend, provided that the combined wt% of all components does not exceed 100 wt%.
Aspect 18. The thermoplastic blend of any one of the aspects 1-17, wherein the impact modifier comprises from about 1 wt% to about 10 wt% of the thermoplastic blend, provided that the combined wt% of all components does not exceed 100 wt%.
Aspect 19. The thermoplastic blend of any one of the aspects 1-18, wherein the impact modifier comprises from about 5 wt% to about 7.5 wt% of the thermoplastic blend, provided that the combined wt% of all components does not exceed 100 wt%.
Aspect 20. The thermoplastic blend of any one of the aspects 1-19, wherein the impact modifier comprises from about 1 wt% to about 6 wt% of the thermoplastic blend, provided that the combined wt% of all components does not exceed 100 wt%.
Aspect 21. The thermoplastic blend of any one of the aspects 1-20, wherein the impact modifier comprises from about 1 wt% to about 8 wt% of the thermoplastic blend, provided that the combined wt% of all components does not exceed 100 wt%.
Aspect 22. The thermoplastic blend of any one of the aspects 1-21, wherein the impact modifier comprises from about 2 wt% to about 6 wt% of the thermoplastic blend, provided that the combined wt% of all components does not exceed 100 wt%.
Aspect 23. The thermoplastic blend of any one of the aspects 1-22, wherein the impact modifier comprises from about 3 wt% to about 10 wt% of the thermoplastic blend, provided that the combined wt% of all components does not exceed 100 wt%.
Aspect 24. The thermoplastic blend of any one of the aspects 1-23, wherein the impact modifier comprises an ethylene - acrylic ester - glycidyl methacrylate terpolymer; a butylene phthalate/poly(alkylene ether) phthalate copolymer; an acrylic acid ethyl ester-ethylene copolymer; an acrylic polymer, or a combination thereof.
Aspect 25. The thermoplastic blend of any one of the aspects 1-24, wherein the impact modifier comprises a butylene phthalate/poly(alkylene ether) phthalate copolymer.
Aspect 26. The thermoplastic blend of any one of the aspects 1-25, wherein the impact modifier comprises about 1 wt% to about 8 wt% of butylene phthalate/poly(alkylene ether) phthalate copolymer.
Aspect 27. The thermoplastic blend of any one of the aspects 1-26, wherein the impact modifier comprises about 2 wt% to about 6 wt% of acrylic acid ethyl ester-ethylene copolymer.
Aspect 28. The thermoplastic blend of any one of the aspects 1-27, wherein the impact modifier comprises about 3 wt% to about 10 wt% of acrylic core-shell polymers.
Aspect 29. The thermoplastic blend of any one of the aspects 1-28, wherein the impact modifier comprises from about 3 wt% ethylene-methyl acrylate-glycidylmethacrylate terpolymer, about 2.5 wt% butylene phthalate/poly(alkylene ether) phthalate copolymer, and about 2 wt% acrylic acid ethyl ester-ethylene copolymer, provided that the combined wt% of all components does not exceed 100 wt%.
Aspect 30. The thermoplastic blend of any one of the aspects 1-29, wherein the impact modifier comprises about 1 wt% to about 6 wt% of ethylene-methyl acrylate-glycidylmethacrylate terpolymer.
Aspect 31. The thermoplastic blend of any one of the aspects 1-30, wherein the heat stabilizer comprises from about 0.01 wt% to about 3 wt% of the thermoplastic blend, provided that the combined wt% of all components does not exceed 100 wt%.
Aspect 32. The thermoplastic blend of any one of the aspects 1-31, wherein the heat stabilizer comprises from about 0.01 wt% to about 1 wt% of the thermoplastic blend, provided that the combined wt% of all components does not exceed 100 wt%.
Aspect 33. The thermoplastic blend of any one of the aspects 1-32, wherein the heat stabilizer comprises from about 0.05 wt% to about 0.2 wt% of the thermoplastic blend, provided that the combined wt% of all components does not exceed 100 wt%.
Aspect 34. The thermoplastic blend of any one of the aspects 1-33, wherein the heat stabilizer comprises from about 0.06 wt% of the thermoplastic blend, provided that the combined wt% of all components does not exceed 100 wt%.
Aspect 35. The thermoplastic blend of any one of the aspects 1-34, wherein the heat stabilizer comprises organophosphites, phosphonates, and phosphates, or a combination thereof.
Aspect 36. The thermoplastic blend of any one of the aspects 1-35, wherein the heat stabilizer comprises triphenyl phosphite, tris-(2,6-dimethylphenyl)phosphite, tris-(mixed mono-and di-nonylphenyl)phosphite, tris(2,4-ditert-butylphenyl)phosphite, dimethylbenzene phosphonate, and trimethyl phosphate, or a combination thereof.
Aspect 37. The thermoplastic blend of any one of the aspects 1-36, wherein the heat stabilizer comprises tetrakis(2,4-di-tert-butylphenyl)[1,1-biphenyl]-4,4'diylbisphosphonite.
Aspect 38. The thermoplastic blend of any one of the aspects 1-36, wherein the heat stabilizer comprises tris(2,4-ditert-butylphenyl) phosphite.
Aspect 39. The thermoplastic blend of aspect 38, wherein the tris(2,4-ditert-butylphenyl) phosphite comprises about 0.06 wt% of the thermoplastic blend, provided that the combined wt% of all components does not exceed 100 wt%.
Aspect 40. The thermoplastic blend of any one of the aspects 1-39, further comprising mold release agents, plasticizers, lubricants, UV stabilizers, colorants, flame retardants, fillers, reinforcing agents, antioxidant agents, antistatic agents, blowing agents, anti-drip agents, and radiation stabilizers.
Aspect 41. The thermoplastic blend of any one of the aspects 1-40, further comprising a mold release agent.
Aspect 42. The thermoplastic blend of aspect 41, wherein the mold release agent comprises dioctyl-4,5-epoxy-hexahydrophthalate; tris-(octoxycarbonylethyl)isocyanurate; tristearin; di- or polyfunctional aromatic phosphates such as resorcinol tetraphenyl diphosphate, the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or a combination thereof.
Aspect 43. The thermoplastic blend of any one of the aspects 41-42, wherein the mold release agent comprises pentaerythritol tetrastearate.
Aspect 44. The thermoplastic blend of any one of the aspects 41-43, wherein the mold release agent comprises from 0.01 wt% to about 5 wt% of the thermoplastic blend, provided that the combined wt% of all components does not exceed 100 wt%.
Aspect 45. The thermoplastic blend of any one of the aspects 1-44, further comprising a reactive additive.
Aspect 46. The thermoplastic blend of aspect 45, wherein the reactive additive comprises styrene-acrylate-epoxy oligomer.
Aspect 47. The thermoplastic blend of any one of the aspects 45-46, wherein the reactive additive comprises from 0.01 wt% to about 5 wt% of the thermoplastic blend, provided that the combined wt% of all components does not exceed 100 wt%.
Aspect 48. The thermoplastic blend of any one of the aspects 1-47, wherein thermoplastic blend has a tensile strength of greater than about 110 MPa as measured in accordance with ASTM D638.
Aspect 49. The thermoplastic blend of any one of the aspects 1-48, wherein the polycarbonate comprises from about 40 wt% to about 60 wt% of a sebacic acid polycarbonate, a bisphenol-A polycarbonate, and a para-cumyl phenol polyestercarbonate.
Aspect 50. A thermoplastic blend comprising from about 30 wt% to about 80 wt% of a polycarbonate; from about 1 wt% to about 60 wt% of an inorganic filler; from about 1 wt% to about 10 wt% of an impact modifier; and from about 0.01 wt% to about 3 wt% a heat stabilizer, wherein the combined wt% of all components does not exceed 100 wt%, wherein a molded specimen of the thermoplastic blend exhibits a bonding strength of greater than about 25 MPa as measured according to ISO 19095, wherein a 3.2 mm molded specimen of the thermoplastic blend has a notched Izod impact strength of greater than about 150 J/m as measured according to ASTM D256 at 23 °C, and wherein the thermoplastic blend has a melt volume flow rate of about 18 cubic centimeters per 10 minutes as measured according to ASTM D256 at 280°C under a 5 kilogram load.

### EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. The following materials listed in Table 1 were employed in the examples.

**Table 1**

| **Component** | **Material Description** | **Source/Vendor** | **Additional Information** |
|---|---|---|---|
| PC-1 (PC OQ) | Polycarbonate, molecular weight (MW) Range From 15000 to 20000 Dalton | LEXAN™ ML7642-111N, SABIC | Resin (BPA OQ PC) |
| PC-2 (PC 172L) | Polycarbonate, MW Range From 22000 to 30000 Dalton | LEXAN™ 105-111N, SABIC | Resin (PC) |
| PC-3 (XHT-PC) | 33% 3,3-bis(4-Hydroxyphenyl)-2-Phenylisoindo-lin-1-one /Bisphenol A Copolycarbonate | LEXAN™, ML7668-111N, SABIC | Resin (XHT copolymer PC) |
| PC-4 (HFD-PC) | Sebacic Acid/Bisphenol A/Para-cumyl Phenol Polyestercarbonate | LEXAN™, ML7683-111N, SABIC | Resin (HFD copolymer PC) |
| IM-1 (Terpolyer) | Ethylene-Methyl Acrylate-Glycidylmethacrylate Terpolymer | LOTADER™ AX 8900, Arkema | Impact Modifier |
| IM-2 (TPEE) | Butylene Phthalate/Poly(Alkylene Ether) Phthalate Copolymer | HYTREL™ 4056, DuPont | Impact Modifier |
| IM-3 (EEA) | Acrylic Acid Ethyl Ester-Ethylene Copolymer | AMPLIFY™ EA 102, Dow | Impact Modifier |
| IM-4 (Acrylic IM) | Acrylic Polymer Impact Modifier | EXL3330, Rohm and Haas | Impact Modifier |
| HS | Tris(2,4-ditert-butylphenyl) phosphite | IRGAFOS™ 168, BASF | Heat Stabilizer |
| GF | Flat Glass, E-glass | CSG 3PA-830, Nittobo | Filler |
| AT | Styrene-Acrylate-Epoxy Oligomer | JONCRYL™ ADR 4368 CS, BASF | Reactive Additive |

Tables 2(a) and 2(b) illustrate various formulations of materials from Table 1. Samples of those formulations were injection molded under the molding conditions of Table 3. The samples then were studied for their physical properties, with the results of those studies are shown in Tables 4(a) and 4(b).

**Table 2(a)**

| **Description** | **Weight** | **#1** | **#2** | **#3** | **#4** | **#5** | **#6** | **#7** | **#8** |
|---|---|---|---|---|---|---|---|---|---|
| **PC-1** | % | | | | | | 44.94 | | |
| **PC-2** | % | | | | | | | 44.94 | |
| **PC-3** | % | | | | | | | | 44.94 |
| **PC-4** | % | 49.94 | 44.94 | 45 | 44.94 | 42.44 | | | |
| **GF** | % | 50 | 50 | 50 | 50 | 50 | 50 | 50 | 50 |
| **IM-1** | % | | 5 | | | | | | |
| **IM-2** | % | | | 5 | | | | | |
| **IM-3** | % | | | | 5 | | | | |
| **IM-4** | % | | | | | 7.5 | 5 | 5 | 5 |
| **HS** | % | 0.06 | 0.06 | 0.06 | 0.06 | 0.06 | 0.06 | 0.06 | 0.06 |
| **AT** | % | | | | | | | | |

**Table 2(b)**

| **Description** | **Weight** | **#9** | **#11** | **#11** | **#12** | **#13** | **#14** | **#15** |
|---|---|---|---|---|---|---|---|---|
| **PC-1** | % | 42.44 | | | | | | |
| **PC-2** | % | | 42.44 | | | | | |
| **PC-3** | % | | | | | 42.44 | 30.34 | 12.3 |
| **PC-4** | % | | | 42.44 | 62.44 | | 12 | 30.04 |
| **GF** | % | 50 | 50 | 50 | 30 | 50 | 50 | 50 |
| **IM-1** | % | 3 | 3 | 3 | 3 | 3 | 3 | 3 |
| **IM-2** | % | 2.5 | 2.5 | 2.5 | 2.5 | 2.5 | 2.5 | 2.5 |
| **IM-3** | % | 2 | 2 | 2 | 2 | 2 | 2 | 2 |
| **IM-4** | % | | | | | | | |
| **HS** | % | 0.06 | 0.06 | 0.06 | 0.06 | 0.06 | 0.06 | 0.06 |
| **AT** | % | | | | | | 0.1 | 0.1 |

### PHYSICAL PROPERTY EVALUATIONS

The nano injection molding process and bonding strength testing were conducted at SABIC Technology Center (Japan) (JTC).

### Melt Volume Flow Rate

The compositions of the present disclosure exhibit superior flow performance. Melt volume flow rate (MVR) was measured as per ASTM D1238 or ISO1133. MVR measures the volume of a composition extruded through an orifice at a prescribed temperature and load over a prescribed time period. The higher the MVR value of a polymer composition at a specific temperature, the greater the flow of that composition at that specific temperature.

In particular, MVR was measured by packing a small amount of thermoplastic blend into an extruder barrel of an extruder. The composition was preheated for a specified amount of time at a particular temperature (here, at 280 °C and 300 °C, respectively). After preheating the composition, a particular weight (here, at 5 kilogram (kg) weight) was introduced to a piston, which acted as the medium that causes extrusion of the molten thermoplastic blend. The weight exerted a force on the piston and thereby the molten thermoplastic blend, and the molten thermoplastic blend flowed through the dye wherein the displacement of the molten thermoplastic blend was measured in cubic centimeters per over time such as 10 minutes (cm³/10 min).

### Tensile Properties

Tensile testing was carried out at 5 mm/min at 23°C on standard Type I tensile injection molded bars having a thickness of 3.2 millimeters in accordance with ASTM D638. Results are reported in MPa.

### Impact Strength

Izod impact testing was performed in accordance with ASTM D256 to determine the resistance of the thermoplastic sample to breakage by flexural shock as indicated by the energy expended from a pendulum type hammer in breaking a standard specimen in a single blow. The specimen was notched which served to concentrate the stress and promote a brittle rather than ductile fracture. Specifically, the Izod impact test measured the amount of energy lost by the pendulum during the breakage of the test specimen. The energy lost by the pendulum is the sum of the energies required to initiate sample fracture, to propagate the fracture across the specimen, and any other energy loss associated with the measurement system (e.g., friction in the pendulum bearing, pendulum arm vibration, sample toss energy, etc.). The Izod impact strength was determined at 23 °C on 3.2 mm thick injection molded samples (notched Izod impact strength, "NII"). The results are expressed in energy lost per unit of thickness (J/m) at the notch.

### Bonding Strength Testing

The compositions of the present disclosure exhibit superior bonding strength. Bonding strength measurement was measured based on ISO19095, the standard of "Evaluation of the adhesion interface performance in plastic-metal assemblies." Sumitomo Heavy Industries, Ltd. SE100EV injection molding machine and Lap shear test tool were employed for this evaluation. Aluminum A5052 was surface treated by chemical etching process by Taisei Plas Co., LTD to create nano- and micro- sized holes. The metal surface had a dimension of about 18mm x 45 mm, and a thickness of about 1.5 mm. Within the effective treatment timeframe, plastic was injection-molded onto the pre-treated aluminum insets. The dimension of the plastic was about 10 mm x 45 mm with a thickness of about 3 mm. The contact area of the metal and the plastic was about 10 mm x 5 mm. All the samples were conditioned prior to tensile test at 23 °C at 50% relative humidity. The bonding force was measured by recording the force when the molded parts were pulled until the breaking point on a Shimadzu AGS-100D standard tensile test machine (manufactured by Shimadzu Corporation AG-IS). Load cell for tensile test machine was about 10 kilonewton (kN) with a speed of 10 millimeters per minute (mm/min). Five test pieces from each sample were measured. The measurements were then averaged to calculate the bonding strength for the sample. Bonding strength was calculated (e.g., to megapascal MPa unit) accordingly by using bonding force divided by bonding area.

An injection molding trial was completed at JTC under the molding conditions as shown in Table 3. Injection speed is presented in millimeters per second (mm/s), hold pressure and back pressure are presented in megapascals (MPa), cooling time is presented in seconds (s).

**Table 3**

| **Material** | **Dry** | **Processing Temp** | **Tool Temp Cav/Core** | **Injection speed** | **Hold pressure** | **Cooling time** | **Back Pressure** |
|---|---|---|---|---|---|---|---|
| | (°C) | (°C) | (°C) | (mm/s) | (MPa) | (sec) | (MPa) |
| ##1-7, ##9-12, #15 | 120 | 280-280-280-280-270 | 150 | 10 | 100/ 100 | 30-60 | 10 |
| #8, #13, #14 | 120 | 300-300-300-300-280 | 150 | 10 | 100/ 100 | 30-60 | 10 |

Physical testing as described above was performed according to the corresponding ISO or ASTM standards. The test results are included in the Tables 4(a) and 4(b) below.

**Table 4(a)**

| **Description** | **Weight** | **#1** | **#2** | **#3** | **#4** | **#5** | **#6** | **#7** | **#8** |
|---|---|---|---|---|---|---|---|---|---|
| **MVR, 280°C/5kg** | cm³/10 min | 31 | 24 | 48 | 29 | 17 | 23 | 19 | 7 |
| **MVR, 300°C/5kg** | cm³/10 min | | | | | | | | 14 |
| **Tensile Strength** | MPa | 159 | 110 | 159 | 142 | 138 | 139 | 154 | 146 |
| **Impact Strength** | J/m | 147 | 121 | 149 | 164 | 175 | 175 | 168 | 117 |
| **Bonding strength (280°C/150°C)** | MPa | 9 | 13 | 25 | 19 | 20 | 18 | 6 | |
| **Bonding strength (300°C/150°C)** | MPa | | | | | | | | 0 |

**Table 4(b)**

| **Description** | **Weight** | **#9** | **#11** | **#11** | **#12** | **#13** | **#14** | **#15** |
|---|---|---|---|---|---|---|---|---|
| **MVR, 280°C/5kg** | cc/10' | 10 | 12 | 19 | 40 | 3 | 4 | 11 |
| **MVR, 300°C/5kg** | cc/10' | | | | | 3 | 3 | 13 |
| **Tensile Strength** | MPa | 129 | 143 | 137 | 114 | 121 | 131 | 139 |
| **Impact Strength** | J/m | 171 | 167 | 179 | 185 | 111 | 127 | 157 |
| **Bonding strength (280°C/150°C)** | MPa | 21 | 19 | 25 | 26 | | | 14 |
| **Bonding strength (300°C/150°C)** | MPa | | | | | 0 | 2 | |

As shown above, different resin combinations resulted in variations in physical properties. The bonding strength was evaluated at 280°C/150°C or 300°C/150°C. Specifically, the bonding strength of formulations including PC-3 (XHT-PC) as the base resin was evaluated at 300°C/150°C because the high heat polymer has a suggested molding temperature of about 300°C-not 280°C. While it is well-known that impact modifiers can improve impact strength performance, it is surprisingly found that selective impact modifiers can also improve bonding strength performance. It is also suggested that the addition of block copolymers or terpolymers improves bonding strength. Among various block copolymer or terpolymers used in the examples, impact modifier IM-2 (TPEE) showed the most effective improvement at bonding strength. More specifically, it was observed that using from about 40% to about 65% PC-4 (HFD-PC) as the base resin and from 2.5% to 5% impact modifier IM-2 (TPEE)-either alone or in combination with other impact modifiers-surprisingly demonstrated improved bonding strength (25 MPa and 26 MPa) as compared to the other samples using less PC-4 base resin, different base resins, and/or different impact modifier combinations. *Compare,* for example, Samples #3, #11, and #12 to Samples #1, #2, #4, #5, #14, and #15.

Also examined where formulation samples that included the same component package (impact modifier, heat stabilizer, and glass fiber-type and loading) but modified the particular resin to determine what combination demonstrated the greatest bonding strength. For example, Sample #11 (PC-4- HFD-PC) showed the greatest bonding strength (25 MPa) when compared to Samples #9 (PC-1-PC OQ), #10 (PC-2-PC 172L), and #13 (PC-3-XHT-PC).

Generally, the less glass loading, the better flow and impact strength, yet the tensile strength will be less due to lower glass loading. It surprisingly was also noted that although Sample #11 and Sample # 12 had different glass loadings (50 wt% vs. 30 wt%, respectively) both samples showed similar bonding strength.

Generally, it is expected that the trade-off of improved impact strength is inferior flow performance. Sample #3 and Sample #11 had the same glass loading. It surprisingly was observed that by selecting the impact modifier and combination, a balance can be achieved between MVR and impact strength while maintaining high bonding strength in the plastic-metal hybrid. *Compare* Sample # 3 (MVR 48/Impact Strength 149) and Sample # 11 (MVR 19/Impact Strength 179). It was observed that selecting PC-4 (HFD-PC)/IM-2 (TPEE) combinations improved the ability to modify the MVR of the composition. Compare Samples #3 and #11.

It was also noted that an increase in PC-4 (HFD-PC) component in the formulation contributed to an increase in bonding strength. Compare Samples #13, #14, and #15.

It was also surprisingly noted that while glass loading did not significantly impact the bonding strength, it did impact other physical properties. Compare Sample #11 (GF 50%) to #12 (GF 30%).

Each of these non-limiting examples can stand on its own, or can be combined in various permutations or combinations with one or more of the other examples.

In the event of inconsistent usages between this document and any documents the usage in this document controls.

It is to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims that follow, reference is be made to a number of terms which are defined herein.

Ranges can be expressed herein as from one value (first value) to another value (second value). When such a range is expressed, the range includes in some aspects one or both of the first value and the second value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A thermoplastic blend comprising
a. a polycarbonate;
b. an inorganic filler;
c. an impact modifier; and
d. a heat stabilizer; and
wherein a molded specimen of the thermoplastic blend exhibits a bonding strength of greater than 25 MPa as measured according to ISO 19095;
wherein a 3.2 mm molded specimen of the thermoplastic blend has a notched Izod impact strength of greater than 150 J/m as measured according to ASTM D256 at 23°C; and
wherein the thermoplastic blend has a melt volume flow rate of greater than 18 cubic centimeters per 10 minutes as measured according to ASTM D256 at 280°C under a 5 kilogram load.

2. The thermoplastic blend of claim 1, wherein polycarbonate comprises a sebacic acid polycarbonate, a bisphenol-A polycarbonate, and a para-cumyl phenol polyestercarbonate.

3. The thermoplastic blend of claim 1, wherein polycarbonate comprises a bisphenol A homopolycarbonate having a molecular weight range from 15,000 to 30,000 Dalton as determined by gel permeation chromatography using bisphenol A polycarbonate standards.

4. The thermoplastic blend of claim 1, comprising from 30 wt% to 80 wt% of the polycarbonate, provided that the combined wt% of all components does not exceed 100 wt%.

5. The thermoplastic blend of claim 1, wherein the inorganic filler comprises flat glass.

6. The thermoplastic blend of claim 1, comprising from 1 wt% to 60 wt% of the inorganic filler, provided that the combined wt% of all components does not exceed 100 wt%.

7. The thermoplastic blend of claim 1, comprising from 30 wt% to 50 wt% of the inorganic filler, provided that the combined wt% of all components does not exceed 100 wt%.

8. The thermoplastic blend of claim 1, comprising from 1 wt% to 10 wt% of the impact modifier, provided that the combined wt% of all components does not exceed 100 wt%.

9. The thermoplastic blend of claim 1, wherein the impact modifier comprises an ethylene - acrylic ester - glycidyl methacrylate terpolymer; a butylene phthalate/poly(alkylene ether) phthalate copolymer; an acrylic acid ethyl ester-ethylene copolymer; an acrylic polymer, or a combination thereof.

10. The thermoplastic blend of claim 1, wherein the impact modifier comprises a butylene phthalate/poly(alkylene ether) phthalate copolymer.

11. The thermoplastic blend of claim 1, comprising from 0.01 wt% to 3 wt% of the heat stabilizer, provided that the combined wt% of all components does not exceed 100 wt%.

12. The thermoplastic blend of claim 1, comprising 0.06 wt% of the heat stabilizer, provided that the combined wt% of all components does not exceed 100 wt%.

13. The thermoplastic blend of claim 1, wherein the heat stabilizer comprises tris(2,4-ditert-butylphenyl) phosphite.

14. The thermoplastic blend of claim 1, further comprising a mold release agent comprising pentaerythritol tetrastearate.

15. The thermoplastic blend of claim 1, further comprising a reactive additive comprising styrene-acrylate-epoxy oligomer.

## Patentansprüche

1. Thermoplastische Mischung, umfassend
a. ein Polycarbonat;
b. einen anorganischen Füllstoff;
c. einen Schlagzähmodifizierer; und
d. einen Hitzestabilisator; und
wobei ein geformter Probekörper der thermoplastischen Mischung eine nach ISO 19095 gemessene Haftfestigkeit größer als 25 MPa aufweist;
wobei ein geformter Probekörper von 3,2 mm der thermoplastischen Mischung eine nach ASTM D256 bei 23 °C gemessene Izod-Kerbschlagzähigkeit größer als 150 J/m aufweist; und
wobei die thermoplastische Mischung einen nach ASTM D256 bei 280 °C unter einer Last von 5 Kilogramm gemessenen Schmelzvolumenstrom größer als 18 Kubikzentimeter pro 10 Minuten aufweist.

2. Thermoplastische Mischung nach Anspruch 1, wobei das Polycarbonat ein Sebacinsäurepolycarbonat, ein Bisphenol-A-Polycarbonat und ein para-Cumylphenolpolyestercarbonat umfasst.

3. Thermoplastische Mischung nach Anspruch 1, wobei das Polycarbonat ein Bisphenol-A-Homopolycarbonat mit einem durch Gelpermeatioschromatographie unter Verwendung von Bisphenol-A-Polycarbonat-Standards bestimmten Molekulargewicht im Bereich von 15.000 bis 30.000 Dalton umfasst.

4. Thermoplastische Mischung nach Anspruch 1, umfassend 30 Gew.-% bis 80 Gew.-% des Polycarbonats, mit der Maßgabe, dass die kombinierten Gewichtsprozente aller Komponenten 100 Gew.-% nicht überschreiten.

5. Thermoplastische Mischung nach Anspruch 1, wobei der anorganische Füllstoff Flachglas umfasst.

6. Thermoplastische Mischung nach Anspruch 1, umfassend 1 Gew.-% bis 60 Gew.-% des anorganischen Füllstoffs, mit der Maßgabe, dass die kombinierten Gewichtsprozente aller Komponenten 100 Gew.-% nicht überschreiten.

7. Thermoplastische Mischung nach Anspruch 1, umfassend 30 Gew.-% bis 50 Gew.-% des anorganischen Füllstoffs, mit der Maßgabe, dass die kombinierten Gewichtsprozente aller Komponenten 100 Gew.-% nicht überschreiten.

8. Thermoplastische Mischung nach Anspruch 1, umfassend 1 Gew.-% bis 10 Gew.-% des Schlagzähmodifizierers, mit der Maßgabe, dass die kombinierten Gewichtsprozente aller Komponenten 100 Gew.-% nicht überschreiten.

9. Thermoplastische Mischung nach Anspruch 1, wobei der Schlagzähmodifizierer ein Ethylen-Acrylester-Glycidylmethacrylat-Terpolymer, ein Butylenphthalat/Poly(alkylenether)phthalat-Copolymer, ein Acrylsäureethylester-EthylenCopolymer, ein Acrylpolymer oder eine Kombination davon umfasst.

10. Thermoplastische Mischung nach Anspruch 1, wobei der Schlagzähmodifizierer ein Buthylenphthalat/Poly(alkylenether)phthalat-Copolymer umfasst.

11. Thermoplastische Mischung nach Anspruch 1, umfassend 0,01 Gew.-% bis 3 Gew.-% des Hitzestabilisators, mit der Maßgabe, dass die kombinierten Gewichtsprozente aller Komponenten 100 Gew.-% nicht überschreiten.

12. Thermoplastische Mischung nach Anspruch 1, umfassend 0,06 Gew.-% des Hitzestabilisators, mit der Maßgabe, dass die kombinierten Gewichtsprozente aller Komponenten 100 Gew.-% nicht überschreiten.

13. Thermoplastische Mischung nach Anspruch 1, wobei der Hitzestabilisator Tris(2,4-ditert-butylphenyl)phosphit umfasst.

14. Thermoplastische Mischung nach Anspruch 1, ferner umfassend ein Entformungsmittel, das Pentaerythritoltetrastearat umfasst.

15. Thermoplastische Mischung nach Anspruch 1, ferner umfassend einen reaktiven Zusatzstoff, der ein Styrol-Acrylat-Epoxy-Oligomer umfasst.

## Revendications

1. Mélange thermoplastique comprenant :
a. un polycarbonate ;
b. une charge inorganique ;
c. un modificateur de la résistance au choc ; et
d. un stabilisant thermique ; et
dans lequel un échantillon moulé du mélange thermoplastique présente une résistance de collage supérieure à 25 MPa telle que mesurée selon ISO 19095 ;
dans lequel un échantillon moulé de 3,2 mm du mélange thermoplastique a une résistance au choc Izod d'éprouvettes entaillées supérieure à 150 J/m telle que mesurée selon ASTM D256 à 23 °C ; et
dans lequel le mélange thermoplastique a un débit de volume fondu supérieur à 18 cm cube par dizaine de minutes tel que mesuré selon ASTM D256 à 280°C sous une charge de 5 kilogrammes.

2. Le mélange thermoplastique de la revendication 1, dans lequel le polycarbonate comprend un polycarbonate d'acide sébacique, un polycarbonate de bisphénol A, et un polyester carbonate para-cumyl phénol.

3. Le mélange thermoplastique de la revendication 1, dans lequel le polycarbonate comprend un homopolycarbonate de bisphénol A ayant une gamme de poids moléculaire allant de 15 000 à 30 000 Dalton telle que déterminée par chromatographie par perméation de gel en utilisant les normes du polycarbonate de bisphénol A.

4. Le mélange thermoplastique de la revendication 1, comprenant de 30% en poids à 80% en poids du polycarbonate, sous réserve que le % en poids combiné de tous les composants n'excède pas 100% en poids.

5. Le mélange thermoplastique de la revendication 1, dans lequel la charge inorganique comprend du verre plat.

6. Le mélange thermoplastique de la revendication 1, comprenant de 1% en poids à 60% en poids de la charge inorganique, sous réserve que le % en poids combiné de tous les composants n'excède pas 100% en poids.

7. Le mélange thermoplastique de la revendication 1, comprenant de 30% en poids à 50% en poids de la charge inorganique, sous réserve que le % en poids combiné de tous les composants n'excède pas 100% en poids.

8. Le mélange thermoplastique de la revendication 1, comprenant de 1% en poids à 10% en poids du modificateur de la résistance au choc, sous réserve que le % en poids combiné de tous les composants n'excède pas 100% en poids.

9. Le mélange thermoplastique de la revendication 1, dans lequel le modificateur de la résistance au choc comprend un terpolymère éthylène - ester d'acrylique - méthacrylate de glycidyle ; un copolymère de butylène phtalate/poly(alkylène éther) phtalate ; un copolymère d'ester éthylique d'acide acrylique-éthylène ; un polymère acrylique, ou une de leurs combinaisons.

10. Le mélange thermoplastique de la revendication 1, dans lequel le modificateur de la résistance au choc comprend un copolymère butylène phtalate/poly(alkylène éther) phtalate.

11. Le mélange thermoplastique de la revendication 1, comprenant de 0,01% en poids à 3% en poids du stabilisant thermique, sous réserve que le % en poids combiné de tous les composants n'excède pas 100% en poids.

12. Le mélange thermoplastique de la revendication 1, comprenant 0,06% en poids du stabilisant thermique, sous réserve que le % en poids combiné de tous les composants n'excède pas 100% en poids.

13. Le mélange thermoplastique de la revendication 1, dans lequel le stabilisant thermique comprend tris(2,4- 10 ditert-butylphenyl) phosphite.

14. Le mélange thermoplastique de la revendication 1, comprenant en outre un agent de démoulage comprenant du tétrastéarate de pentaérythritol.

15. Le mélange thermoplastique de la revendication 1, comprenant en outre un additif réactif comprenant un oligomère styrène-acrylate-époxy.
